# EUROPEAN PATENT APPLICATION

(11) **EP 3 045 511 A1**
(43) Date of publication of application: **20.07.2016**
(21) Application number: 14842748.7
(22) Date of filing: 24.06.2014
(51) Int. Cl.: C09K 11/64, C09K 11/08, G01L 1/24, G01N 21/70

(54) **NEAR-INFRARED MECHANOLUMINESCENT MATERIAL, NEAR-INFRARED MECHANOLUMINESCENT OBJECT, AND PROCESS FOR PRODUCING NEAR-INFRARED MECHANOLUMINESCENT MATERIAL**

(30) Priority: 09.09.2013 JP 2013186698
(71) Applicant: National Institute of Advanced Industrial Science and Technology, Tokyo 100-8921 (JP)
(72) Inventor: TERASAKI Nao, Tosu-shi Saga 841-0052 (JP); XU,Chao-Nan, Tosu-shi Saga 841-0052 (JP)
(74) Representative: Takeuchi, Maya
(86) International application number: PCT/JP2014/066725
(87) International publication number: WO 2015/033648

(57) **Abstract**

Provided is a mechanoluminescent material which can radiate near-infrared light. The mechanoluminescent material includes an aluminate co-doped with Eu²⁺, Cr³⁺, and an ion or ion cluster of at least any one rare earth metal element selected from Sc, Y, La, Ce, Pr, Nd, Pm, Sm, Eu, Gd, Tb, Dy, Ho, Er, Tm, Yb, or Lu. In addition, in the mechanoluminescent material, the aluminate is an aluminate represented by Formula MAl₂O₄ (provided that, M is any of Mg, Ca, Sr, or Ba) and Eu²⁺, Cr³⁺, and the ion or ion cluster of a rare earth metal element are co-doped at a concentration at which M in the aluminate is substituted by from 0.25 to 10%. [Selected Drawing] Figure 7

## Description

### [Technical Field]

The present invention relates to a near-infrared mechanoluminescent material and a near-infrared mechanoluminescent body which exhibit near-infrared luminescence by being deformed as a mechanical external force is applied thereto, and a method for manufacturing a near-infrared mechanoluminescent material.

### [Background Art]

Hitherto, a phenomenon that a substance emits visible light at around room temperature as an external stimulus is applied thereto is well known as the so-called fluorescent phenomenon.

Such a substance which exhibits a fluorescent phenomenon, namely, a fluorescent body is used as an illuminating lamp such as a fluorescent lamp, a display such as a CRT (Cathode Ray Tube) the so-called Braun tube, or the like.

The external stimulus causing this fluorescent phenomenon is usually provided by ultraviolet light, electron beams, X-rays, radiation, electric fields, a chemical reaction, and the like, but a material that is intensively luminescent by being deformed as a stimulus such as a mechanical external force is applied thereto has not been known for a long time.

Accordingly, a novel luminescent material which emits light by being deformed by a mechanical external force and has not been known so far has been proposed as a result of extensive researches carried out in the research institute to which the present inventors belong (for example, see Patent Literatures 1 to 6).

Thereafter, such a luminescent material is referred to as the mechanoluminescent material, and at the present, researches on the application of this mechano luminescent material to a non-destructive inspection technique in the maintenance management of existing civil engineering structures, a visualization technique of stress distribution of the member of structures, or the like as a new measurement technique are actively carried out.

In addition, the luminescent color of these mechanoluminescent materials is mainly green to which the human has a high photopic relative luminosity factor, and a force-light conversion efficiency which has a high luminance enough to be visible and satisfies the needs for practical use has been achieved.

In addition, a mechanoluminescent material which is luminescent in the ultraviolet to visible to red region has also been reported, and it has also been reported that these mechanoluminescent materials are an afterglow material that emits afterglow of the same color responding to heat at about room temperature at the same time.

### [Citation List]

### [Patent Literatures]

Patent Literature 1: Japanese Unexamined Patent Publication No. 2001-049251
Patent Literature 2: Japanese Unexamined Patent Publication No. 2000-119647
Patent Literature 3: Japanese Unexamined Patent Publication No. 2000-313878
Patent Literature 4: Japanese Unexamined Patent Publication No. 2003-165973
Patent Literature 5: Japanese Unexamined Patent Publication No. 2003-292949
Patent Literature 6: Japanese Unexamined Patent Publication No. 2004-043656

### [Summary of Invention]

### [Technical Problem]

However, it is desirable to use near-infrared light (mainly from 650 to 1100 nm of living body transmitting wavelength: window in living body) that is hardly optically affected by a biological tissue but easily transmits when the measurement and diagnostic target by the mechanoluminescent material is extended to the interior of a living body and the like.

However, the mechanoluminescent material of the prior art described above is one that radiates ultraviolet to visible to red light, and thus there is a problem that it is strongly affected by the absorption or scattering by water or blood, biological tissues, and the like and transmissive properties thereof significantly deteriorate.

In addition, the wavelength range of the ambient light (indoor fluorescent lamp and the like, 850 nm or less) overlap with that of the light radiated from the mechanoluminescent material in the mechanoluminescent measurement and diagnosis using ultraviolet to visible to red light of the prior art.

In other words, the ambient light having a dominant quantity of light works as the noise with respect to mechanoluminescence, and thus there is also a problem that a significant decrease in SN ratio is caused.

Hence, the measurement environment is prepared in a dark room or by eliminating the ambient light with a blackout curtain or the like, but in a case in which the place to conduct the measurement is, for example, the production site in a factory, or the like, the measurement is often limited by the space or environment, and it is not possible to sufficiently eliminate the ambient light in some cases as there is a rule that the fluorescent lamps is turned on all the times for safety reasons.

For these reason, a mechanoluminescent material having a luminescent color that can be used in the stress measurement without being affected by the ambient light is desired.

The present invention has been made in view of such circumstances and provides a mechanoluminescent material which can radiate near-infrared light.

In addition, the present invention also provides a mechanoluminescent body which can radiate near-infrared light and a method for manufacturing a mechanoluminescent material.

### [Solution to Problem]

In order to solve the above problem of the prior art, the near-infrared mechanoluminescent material according to the present invention (1) includes an aluminate co-doped with Eu²⁺, Cr³⁺, and an ion or ion cluster of at least any one rare earth metal element selected from Sc, Y, La, Ce, Pr, Nd, Pm, Sm, Eu, Gd, Tb, Dy, Ho, Er, Tm, Yb, or Lu.

In addition, the near-infrared mechanoluminescent material according to the present invention is also characterized by the following points.
(2) The aluminate is an aluminate represented by Formula MAl₂O₄ (provided that, M is any of Mg, Ca, Sr, or Ba).
(3) Eu²⁺ is co-doped at a concentration at which M in the aluminate represented by Formula MAl₂O₄ is substituted by from 0.25 to 10%.
(4) Cr³⁺ is co-doped at a concentration at which M in the aluminate represented by Formula MAl₂O₄ is substituted by from 0.25 to 10%.
(5) The ion or ion cluster of a rare earth metal element is co-doped at a concentration at which M in the aluminate represented by Formula MAl₂O₄ is substituted by from 0.25 to 10%.
(6) The ion of a rare earth metal element is Nd³⁺.
(7) Nd³⁺ is co-doped at a concentration at which M in the aluminate represented by Formula MAl₂O₄ is substituted by from 0.25 to 10%.

In addition, the near-infrared mechanoluminescent material according to the present invention (8) includes an aluminate co-doped with Eu²⁺ and Nd³⁺.

In addition, the near-infrared mechanoluminescent body according to the present invention (9) is formed by dispersing the near-infrared mechanoluminescent material according to any one of (1) to (8) described above in a predetermined matrix material.

In addition, in the near-infrared mechanoluminescent body according to the present invention, (10) a wavelength converting material which is excited by an electromagnetic wave which has a wavelength other than a near-infrared wavelength and is radiated from the near-infrared mechanoluminescent material and radiates an electromagnetic wave having a near-infrared wavelength is added to the matrix material.

In addition, the method for manufacturing a near-infrared mechanoluminescent material according to the present invention (11) includes a mixing step of producing a raw material mixture by mixing a host material constituting raw material to constitute an aluminate through a calcining step to be described later, a Eu²⁺ supplying raw material to supply Eu²⁺ to the aluminate, a Cr³⁺ supplying raw material to supply Cr³⁺ to the aluminate, and a rare earth metal element ion supplying raw material to supply an ion or ion cluster of at least any one rare earth metal element selected from Sc, Y, La, Ce, Pr, Nd, Pm, Sm, Eu, Gd, Tb, Dy, Ho, Er, Tm, Yb, or Lu to the aluminate, and a calcining step of calcining the raw material mixture produced in the mixing step to produce a near-infrared mechanoluminescent material including an aluminate co-doped with Eu²⁺, Cr³⁺, and the ion or ion cluster of a rare earth metal element.

In addition, in the present invention, (12) Eu²⁺, Cr³⁺, and an ion or ion cluster of at least any one rare earth metal element selected from Sc, Y, La, Ce, Pr, Nd, Pm, Sm, Eu, Gd, Tb, Dy, Ho, Er, Tm, Yb, or Lu are used as a near-infrared ray luminescent center of a mechanoluminescent material in an aluminate in a co-doped state.

In addition, in the present invention, (13) the near-infrared mechanoluminescent material according to any one of (1) to (8) described above is used as a near-infrared afterglow material.

In addition, in the present invention, (14) the near-infrared mechanoluminescent body according to (9) or (10) described above is used as a near-infrared afterglow body.

### [Advantageous Effects of Invention]

According to the present invention, it is possible to provide a mechano luminescent material or a mechano luminescent body which can radiate near-infrared light, a method for manufacturing a mechano luminescent material, a near-infrared afterglow material, and a near-infrared afterglow body.

### [Brief Description of Drawings]

[Figure 1] Figure 1 is an explanatory diagram illustrating an application example of the near-infrared mechanoluminescent material according to the present embodiment.
[Figure 2] Figure 2 is an explanatory diagram illustrating the results of a test for confirming doped metal ion species dependence.
[Figure 3] Figure 3 is an explanatory diagram illustrating the results of a test for confirming doped metal ion species dependence.
[Figure 4] Figure 4 is an explanatory diagram illustrating the results of a test for confirming doped metal ion concentration dependence.
[Figure 5] Figure 5 is an explanatory diagram illustrating a luminescence spectrum of a near-infrared mechanoluminescent material.
[Figure 6] Figure 6 is an explanatory diagram illustrating the afterglow decay curve of the near-infrared mechanoluminescent material as an afterglow material at each wavelength.
[Figure 7] Figure 7 is an explanatory diagram illustrating the results of a test for measuring mechano luminescence of a near-infrared mechanoluminescent body.
[Figure 8] Figure 8 is an explanatory diagram illustrating the results of an experiment for acquiring living body transmission image by the afterglow from a near-infrared mechano luminescent body as an afterglow body.
[Figure 9] Figure 9 is an explanatory diagram illustrating the results of an experiment for visualizing biomechanical information as a near-infrared mechanoluminescent body and an afterglow body.
[Figure 10] Figure 10 is an explanatory diagram illustrating the results of a test for measuring mechanoluminescence in a bright environment.

### [Description of Embodiments]

The present invention is to provide a mechanoluminescent material or a mechano luminescent body which emits near-infrared light, a method for using these, or use of these as a near-infrared afterglow material and a near-infrared afterglow body, and a method for manufacturing a near-infrared mechanoluminescent material.

First, an application example of the near-infrared mechanoluminescent material according to the present embodiment will be described in order to facilitate understanding on the present invention, and the specific configuration of the near-infrared mechanoluminescent material and the like according to the present embodiment will be then described.

As described above, a mechanoluminescent material which emits near-infrared light at a practical intensity is significantly useful when the measurement and diagnostic target by the mechanoluminescent material is extended to the interior of a living body and the like, in a case in which it is difficult to sufficiently eliminate the ambient light, or the like.

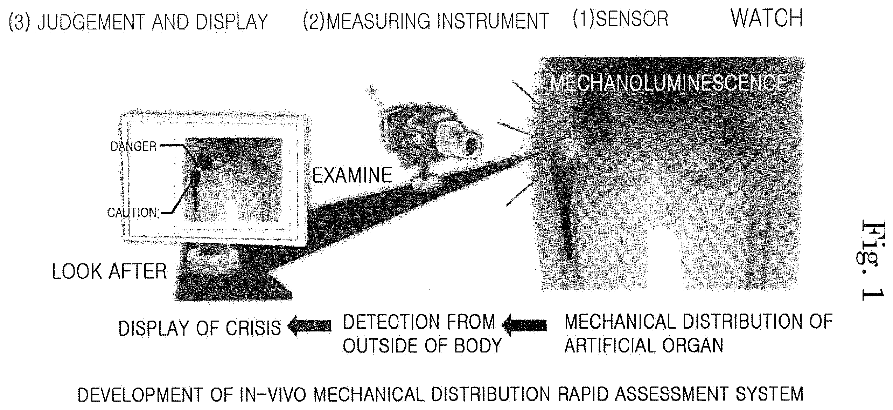

In particular, in the living body - related field, it is believed that the mechanoluminescent material is linked with the in-vivo mechanical distribution rapid assessment system which can rapidly and highly reliably measure the distribution of in-vitro stress applied to the prosthetic joints and implants, the in-vivo stress distribution and time course after operation, and the like, for example, as illustrated in Figure 1.

It is considered that this allows an accurate diagnosis in the medical site, for example, and leads to the postoperative deterioration of implant, the personalized medicine, preemptive medical care, and surgical procedure improvement based on the actual measurement of the influence on the surrounding bones. In addition, the development cost suppression brought about by the establishment of a mechanical distribution rapid assessment method and a highly reliably designed product lead to the strengthening of international competitiveness of domestic affiliated companies, and thus a decrease in burden (both of pain and expenses) of the patient can be expected.

In addition, although it is not particularly illustrated in the drawings, it is possible to acquire the mechanical data using the mechano luminescent material even under the conditions in which the ambient light is present, and thus it is possible to expect to utilize the mechanoluminescent material in the periodic inspection, safety diagnosis, and conservation of the social infrastructures, structures, production parts, machinery, and factory.

Next, the configuration of the near-infrared mechanoluminescent material according to the present embodiment will be described. The near-infrared mechanoluminescent material according to the present embodiment is specifically one that is formed by co-doping Eu²⁺, Cr³⁺, and an ion or ion cluster of at least any one rare earth metal element selected from Sc, Y, La, Ce, Pr, Nd, Pm, Sm, Eu, Gd, Tb, Dy, Ho, Er, Tm, Yb, or Lu to an aluminate.

The near-infrared mechanoluminescent material according to the present embodiment is in a state that an electron and a hole (carrier) are trapped in the trap level due to the lattice defect by Eu²⁺ in the aluminate as a host material when it is excited by light, and this trapped carrier is released to be recombined when stress or heat is applied to this host material. At this time, a predetermined green light (510 to 530 nm, for example, 516 nm) is radiated, but it is believed that near-infrared light is radiated as a portion of this light acts on Cr³⁺ or an ion of a predetermined rare earth metal element.

As such a host material having a lattice defect, at least one kind of aluminate having a non-stoichiometric composition is used. Here, the non-stoichiometric composition refers to a composition having a chemical composition formula deviating from the stoichiometric chemical composition formula.

As such an aluminate having a non-stoichiometric composition, it is possible to mention an alkaline earth metal compound, for example, those which are composed of an alkaline earth metal oxide and aluminum oxide, an alkaline earth metal deficient type in which the composition ratio of the alkaline earth metal ion in this is deficient, and contains one represented by Formula MₓAl₂O₃₊ₓ[M in Formula is Mg, Ca, Sr or Ba, and x is a number satisfying 0.7 ≤ x < 1] as a main component.

In addition, as the luminescent center used in the near-infrared mechanoluminescent material, for example, it is possible to use a divalent europium ion (Eu²⁺), a trivalent chromium ion (Cr³⁺), and an ion or ion cluster (Q) of a predetermined rare earth metal element in a co-doped state.

The concentration of Eu²⁺ in the near-infrared mechanoluminescent material can be set to a concentration at which M in the aluminate represented by Formula MAl₂O₄ as the host material is substituted with Eu²⁺ by from 0.25 to 10%, and more preferably, it can be set to a concentration at which M is substituted by from 0.5 to 1.5%.

In addition, the concentration of Cr³⁺ in the near-infrared mechanoluminescent material can be set to a concentration at which M in the aluminate represented by Formula MAl₂O₄ as the host material is substituted with Cr³⁺ by from 0.25 to 10%, and more preferably, it can be set to a concentration at which M is substituted by from 2 to 5%.

In addition, the concentration of the ion or ion cluster (Q) of a rare earth metal element in the near-infrared mechanoluminescent material can be set to a concentration at which M in the aluminate represented by Formula MAl₂O₄ as the host material is substituted with the ion or ion cluster (Q) of a rare earth metal element by from 0.25 to 10%.

As this predetermined rare earth metal element, for example, it is possible to use at least any one of scandium (Sc), yttrium (Y), or an element belonging to the lanthanoid, namely, lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), or lutetium (Lu).

The number of elements to be co-doped in these luminescent centers may be adjusted in accordance with the lattice structure of the host material, a desired luminescent color, or the like within the range of the conditions described above. In other words, the amount of the luminescent center to be doped may be an amount which does not satisfy the substitution of M or may be an amount to be excessively doped.

In addition, the ion (Q) of a rare earth metal element may also be Nd³⁺, for example. It is possible to exhibit favorable near-infrared luminescence as the ion (Q) of a rare earth metal element is Nd³⁺.

The concentration of Nd³⁺ in the near-infrared mechanoluminescent material can be set to a concentration at which M in the aluminate represented by Formula MAl₂O₄ as the host material is substituted with Nd³⁺ by from 0.25 to 10%, and more preferably, it can be set to a concentration at which M is substituted by from 0.5 to 2%. Specifically, it is represented by Formula Sr_{{1-(2x+3y+3z)/2}}Al₂O₄:xEu²⁺,yCr³⁺,zNd³⁺ (provided that, x, y, and z are from 0.25 to 10 mol% and preferably from 0.5 to 2 mol%), for example, when M is Sr. Incidentally, in the following description or drawings, for example, a material in which Sr in SrAl₂O₄ as the host material is substituted with Eu²⁺, Cr³⁺, and Nd³⁺ by 0.01%, 0.01%, and 0.01%, respectively, is represented by SrAl₂O₄:Eu_{0.01}Cr_{0.01}Nd_{0.01} in some cases.

In addition, the near-infrared mechanoluminescent material according to the present embodiment may be one that is formed by co-doping Eu²⁺ and Nd³⁺ to an aluminate. Such a near-infrared mechanoluminescent material can also exhibit favorable near-infrared luminescence.

In addition, the near-infrared mechanoluminescent material described above may be formed into a near-infrared mechanoluminescent body by being dispersed in a predetermined matrix material. For example, it is possible to easily form a near-infrared mechanoluminescent body which exhibits near-infrared luminescent properties and has a desired shape by using a resin exhibiting curing properties as a matrix material and dispersing and curing the powdered infrared mechanoluminescent material in the resin before being cured. Incidentally, as the matrix material, at least those which are able to transmit excitation light for exciting the near-infrared mechanoluminescent material mixed in the matrix material and near-infrared light radiated from the near-infrared mechanoluminescent material are used. In addition, it is desirably a material which transfers the force applied from the outside of the near-infrared mechanoluminescent body to the near-infrared mechanoluminescent material and can impart stress to the near-infrared mechanoluminescent material to an extent to which the near-infrared mechanoluminescence is caused. Provided that, this shall not apply in a case in which the near-infrared mechanoluminescent material is only used as an afterglow body.

Meanwhile, the near-infrared mechanoluminescent material according to the present embodiment radiates light (for example, green light at 516 nm) other than near-infrared light depending on its composition in some cases as previously described.

Hence, a wavelength converting material may be added to a predetermined matrix material constituting the near-infrared mechanoluminescent body in order to radiate near-infrared light by utilizing such light other than near-infrared light.

In other words, a wavelength converting material which is excited by an electromagnetic wave which has a wavelength other than a near-infrared wavelength and is radiated from the near-infrared mechanoluminescent material and radiates an electromagnetic wave having a near-infrared wavelength may be added to a predetermined matrix material constituting the near-infrared mechanoluminescent body.

The wavelength converting material added to the matrix material can be a coloring matter, a fluorescent material, and a wavelength converting material which absorb light (electromagnetic wave having a wavelength other than the near-infrared wavelength) derived from Eu²⁺ and is able to be luminescent in the near-infrared region, and examples thereof may include CdSe-based quantum dots, CdSeTe-based quantum dots, a Cr complex, a Nd complex, and an Alexa-based coloring matter, and a carbocyanine-based coloring matter (Cy3, Cy5, and Cy7).

It is possible to provide a mechano luminescent body which can be easily molded into a desired shape and exhibits higher near-infrared luminescent properties by having such a configuration. Incidentally, as the matrix material, at least those which are able to transmit light derived from Eu²⁺ (electromagnetic wave having a wavelength other than the near infrared wavelength) in addition to excitation light for exciting the near-infrared mechanoluminescent material mixed in the matrix material or near-infrared light radiated from the near-infrared mechanoluminescent material are used.

In addition, in the present embodiment, a method for manufacturing a near-infrared mechanoluminescent material is also provided. Specifically, a method for manufacturing a near-infrared mechanoluminescent material is provided which includes a mixing step of producing a raw material mixture by mixing a host material constituting raw material to constitute an aluminate through a calcining step to be described later, a Eu²⁺ supplying raw material to supply Eu²⁺ to the aluminate, a Cr³⁺ supplying raw material to supply Cr³⁺ to the aluminate, and a rare earth metal element ion supplying raw material to supply an ion or ion cluster of at least any one rare earth metal element selected from Sc, Y, La, Ce, Pr, Nd, Pm, Sm, Eu, Gd, Tb, Dy, Ho, Er, Tm, Yb, or Lu to the aluminate, and a calcining step of calcining the raw material mixture produced in the mixing step to produce a near-infrared mechanoluminescent material including an aluminate co-doped with Eu²⁺, Cr³⁺, and the ion or ion cluster of a rare earth metal element.

Here, the host material constituting raw material is not particularly limited as long as the raw material can constitute the aluminate as the host material through the calcining step described above. For example, in a case in which the host material is strontium aluminate, it is possible to constitute the host material by carrying out the calcining step using strontium carbonate (SrCO₃), aluminum oxide (α-Al₂O₃), or the like as the host material constituting raw material, but the raw material is not limited to a carbonate or an oxide, and it is possible to utilize raw material compounds which are able to form a desired host material, such as a nitrate, a chloride, a hydroxide, and an organic salt.

In addition, the Eu²⁺ supplying raw material to supply Eu²⁺ to the aluminate, the Cr³⁺ supplying raw material to supply Cr³⁺ to the aluminate, and the rare earth metal element ion supplying raw material to supply an ion or ion cluster (Q) of a rare earth metal element are not also particularly limited, and for example, for Eu²⁺, it is possible to supply Eu²⁺ to the host material from europium oxide Eu₂O₃, but the raw material is not limited to an oxide, and it is possible to utilize raw material compounds which can supply Eu²⁺, Cr³⁺, or an ion or ion cluster (Q) of a rare earth metal element to the host material through the calcining step, such as a nitrate, a chloride, a hydroxide, an organic salt, and a carbonate.

In addition, the manufacture of the mechanoluminescent material may be conducted by utilizing a solid-phase synthesis method, a sol-gel method, a hydrothermal synthesis method, an evaporation to dryness method, an explosion method, a spraying method, a ultrasonic spraying method, and the like.

In this manner, it is possible to provide a near-infrared mechanoluminescent material exhibiting excellent near-infrared luminescent properties by using Eu²⁺, Cr³⁺, and an ion or ion group of at least any one rare earth metal element selected from Sc, Y, La, Ce, Pr, Nd, Pm, Sm, Eu, Gd, Tb, Dy, Ho, Er , Tm, Yb, or Lu as the near-infrared ray luminescent center of the mechanoluminescent material in the aluminate in a co-doped state in the near-infrared mechanoluminescent material according to the present embodiment.

In addition, it is possible to provide a near-infrared afterglow material exhibiting excellent near-infrared luminescent properties by using the near-infrared mechanoluminescent material described above as an afterglow material.

Concurrently, it is possible to provide a near-infrared afterglow body exhibiting excellent near-infrared luminescent properties by using the near-infrared mechanoluminescent body described above as an afterglow body.

Incidentally, it can also think that the present invention is to provide a near-infrared mechanoluminescent material having a luminescence intensity of 1 nW/cm² or more, a near-infrared mechanoluminescent body, a near-infrared afterglow material, a near-infrared afterglow body, and a method for manufacturing a near-infrared mechanoluminescent material. According to extensive researches by the present inventors, it has been found that at least a luminescence intensity of 1 nW/cm² or more is required in a wavelength range of from 650 to 1100 nm called a window in living body in order to transmit light through a living body and to observe the mechanical distribution inside the living body from the outside of the living body, and it is possible to provide a near-infrared mechanoluminescent material having a luminescence intensity of 1 nW/cm² or more in a wavelength range of from 650 to 1100 nm, a near-infrared mechanoluminescent body, a near-infrared afterglow material, a near-infrared afterglow body, and a method for manufacturing a near-infrared mechanoluminescent material according to the near-infrared mechanoluminescent material, the near-infrared mechanoluminescent body, the near-infrared afterglow material, the near-infrared afterglow body, and the method for manufacturing a near-infrared mechanoluminescent material according to the present embodiment.

Hereinafter, the near-infrared mechanoluminescent material or the near-infrared mechanoluminescent body according to the present embodiment, use of these as an afterglow material or an afterglow body, and a method for manufacturing a near-infrared mechanoluminescent material will be described in more detail with reference to the drawings or the experimental data. Incidentally, a case of using SrAl₂O₄ as the host material is presented as an example in the following description, but the composition of the host material is not limited thereto as previously described.

### [Preparation of near-infrared mechanoluminescent material (SrAl₂O₄:Eu_{0.01}Cr_{0.01}Nd_{0.01})]

First, the preparation of a near-infrared mechanoluminescent material will be described. Here, the preparation of SrAl₂O₄:Eu_{0.01}Cr_{0.01}Nd_{0.01} is presented as an example, but it is possible to prepare a near-infrared mechano luminescent material having another composition in substantially the same manner as the following preparation method.

SrCO₃ (manufactured by KANTO CHEMICAL CO., INC.) and α-Al₂O₃ (manufactured by KOJUNDO CHEMICAL LABORATORY CO., LTD.) as the host material constituting raw material, Eu₂O₃ (manufactured by KOJUNDO CHEMICAL LABORATORY CO., LTD.) as the Eu²⁺ supplying raw material, Cr₂O₃ (manufactured by KOJUNDO CHEMICAL LABORATORY CO., LTD.) as the Cr³⁺ supplying raw material, and Nd₂O₃ (manufactured by KOJUNDO CHEMICAL LABORATORY CO., LTD.) as the rare earth metal element ion supplying raw material were respectively weighed so as to have a molar ratio of 0.97:2:0.01:0.01:0.01, and the raw materials were sufficiently mixed using a mortar in ethanol in a state that H₃BO₃ (manufactured by Wako Pure Chemical Industries, Ltd.) was added thereto in a molar ratio of from 1 to 10%.

Next, ethanol was sufficiently evaporated from this mixture, the powder thus obtained was accommodated in a crucible and heated for 2 hours at 800°C in the air using the muffle furnace manufactured by YAMATO SCIENTIFIC CO., LTD. to conduct temporary calcination, the resultant was then calcined (main calcination) for from 2 to 8 hours, for example, for 6 hours at from 1100 to 1500°C in a reducing atmosphere of 5% H₂/Ar using a reducing atmosphere carbon electric furnace, and the powder thus obtained was adopted as the near-infrared mechanoluminescent material.

Incidentally, the temporary calcination is conducted prior to the main calcination in the present preparation example, but the main calcination may be conducted without conducting the temporary calcination. According to the test by the present inventors, a finding is obtained that the luminescence intensity of the prepared near-infrared mechanoluminescent material in the near-infrared region is significantly improved in the case of conducting the main calcination without conducting the temporary calcination as compared to the case of conducting the main calcination after conducting the temporary calcination.

In addition, the main calcination is conducted at from 1100 to 1500°C in the present preparation example, but it is preferable to set the temperature for the main calcination to be in a range of from 1300 to 1500°C. A finding is obtained that the luminescence intensity of the prepared near-infrared mechanoluminescent material in the near-infrared region is significantly improved in the case of conducting the main calcination at a temperature of 1300°C or higher and 1500°C or lower as compared to the case of conducting the main calcination at a temperature of 1100°C or higher and lower than 1300°C.

In addition, H₃BO₃ as a sintering aid is added in a molar ratio of from 1 to 10% in the present preparation example, but it is even more preferable to add H₃BO₃ in a molar ratio of from 2 to 4%. A finding is obtained that the luminescence intensity of the prepared near-infrared mechanoluminescent material in the near-infrared region is significantly improved in the case of setting the amount of H₃BO₃ added to 2% or more and 4% or less as compared to the case of setting the amount of H₃BO₃ added to 1% or more and less than 2% or more than 4% and 10% or less.

### [Test for confirming doped metal ion species dependence of near-infrared mechano luminescent material]

In the present test, various test samples were fabricated according to the manufacturing method described above and a load was applied thereto to investigate which rare earth metal ion (Q) is effective to be co-doped to strontium aluminate (SrAl₂O₄) in addition to Eu²⁺ (divalent europium) and Cr³⁺ (trivalent chromium).

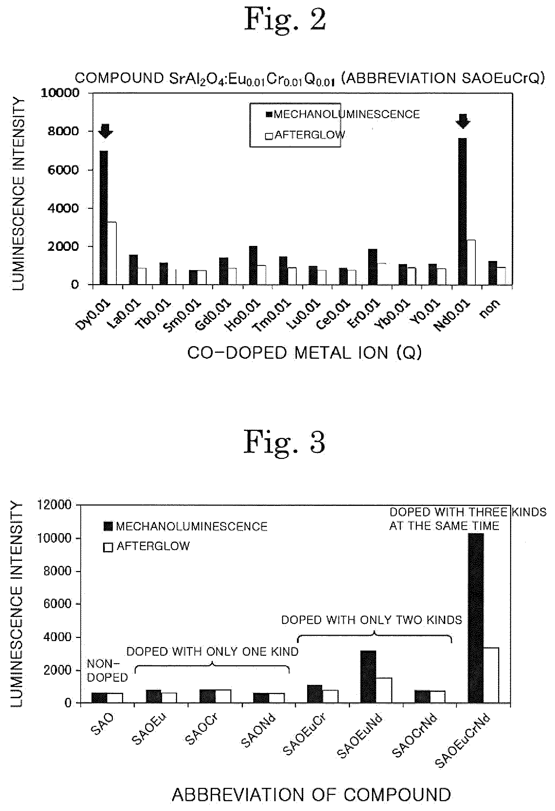

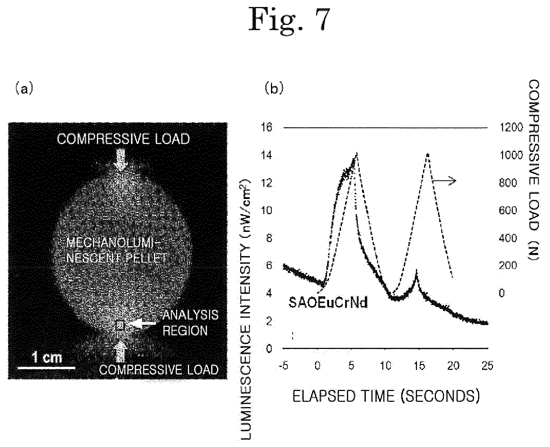

Specifically, the luminescence intensity of a near-infrared mechanoluminescent material (SrAl₂O₄:Eu_{0.01}Cr_{0.01}Q_{0.01}) prepared by co-doping Eu²⁺, Cr³⁺, and an ion (Q) of at least any one rare earth metal element selected from Sc, Y, La, Ce, Pr, Nd, Pm, Sm, Eu, Gd, Tb, Dy, Ho, Er, Tm, Yb, or Lu to strontium aluminate as the host material was measured, and what luminescent properties the near-infrared mechanoluminescent material exhibited was investigated. The concentrations of the respective metal ions doped in this experiment were all set to 1 mol%. The results are illustrated in Figure 2. Incidentally, the measurement of mechano luminescence is conducted by applying a load to the mechano luminescent material which is releasing afterglow after excitation, and the measurement data shows a behavior as the graph for the luminescence intensity illustrated in Figure 7(b) to be described later. The intensity of afterglow in Figure 2 or Figure 3 to be described later is, for example, a value (value at the elapsed time of 0 second) immediately before applying a load in the luminescence curve in Figure 7(b), and the intensity of mechanoluminescence in Figure 2 or Figure 3 corresponds to the value of the peak in the luminescence curve in Figure 7(b), for example.

As can be seen from Figure 2, it was possible to observe the near-infrared mechano luminescence and afterglow in any system regardless of the kind and presence or absence of a rare earth metal ion that was co-doped to strontium aluminate (SrAl₂O₄) other than Eu²⁺ and Cr³⁺.

In addition, it is noteworthy that relatively high near-infrared mechano luminescence and afterglow was observed with regard to Nd³⁺ neodymium, Dy³⁺ dysprosium, Ho³⁺ holmium, and Er³⁺ erbium, and among them, significantly high near-infrared mechanoluminescence and afterglow was observed with regard to particularly the compounds obtained by doping Nd³⁺ neodymium and Dy³⁺ dysprosium.

From these facts, it has been indicated that it is an effective means for obtaining a material exhibiting high near-infrared mechanoluminescence and afterglow to co-dope Eu²⁺, Cr³⁺, and an ion (Q) of at least any one rare earth metal element selected from Sc, Y, La, Ce, Pr, Nd, Pm, Sm, Eu, Gd, Tb, Dy, Ho, Er, Tm, Yb, or Lu to strontium aluminate (SrAl₂O₄).

In addition, it has been indicated that it is an effective means for obtaining a material exhibiting higher near-infrared mechanoluminescence and afterglow to co-dope Eu²⁺, Cr³⁺, and an ion (Q) of at least any one rare earth metal element selected from La, Nd, Gd, Tb, Dy, Ho, Er, or Tm to strontium aluminate (SrAl₂O₄).

In particular, it has been indicated that it is an effective means for obtaining a material exhibiting significantly high near-infrared mechanoluminescence and afterglow to co-dope at least three kinds of Eu²⁺, Nd³⁺, and Cr³⁺ or at least three kinds of Eu²⁺, Dy³⁺, and Cr³⁺ to strontium aluminate (SrAl₂O₄).

### [Test for confirming doped metal ion species dependence of strontium aluminate (SrAl₂O₄) having different combinations of Eu²⁺, Cr³⁺, and Nd³⁺ on near-infrared mechanoluminescence and afterglow intensity]

Next, attention was paid to Nd among Sc, Y, La, Ce, Pr, Nd, Pm, Sm, Eu, Gd, Tb, Dy, Ho, Er, Tm, Yb, and Lu which exhibited near-infrared luminescent properties in the previous test, and a difference in near-infrared luminescent properties depending on the combination of Eu²⁺, Cr³⁺, and Nd³⁺ was verified.

Specifically, the near-infrared mechanoluminescence and afterglow intensities of a compound (SrAl₂O₄:Eu²⁺,Cr³⁺,Nd³⁺, abbreviation: SAOEuCrNd) in which Eu²⁺, Cr³⁺, and Nd³⁺ were co-doped to strontium aluminate (SrAl₂O₄) at the same time, a compound (SrAl₂O₄, abbreviation: SAO) in which metal ions of Eu²⁺, Cr³⁺, and Nd³⁺ were not doped to strontium aluminate (SrAl₂O₄), a compound (SrAl₂O₄:Eu²⁺, abbreviation: SAOEu, SrAl₂O₄:Cr³⁺, abbreviation: SAOCr, SrAl₂O₄:Nd³⁺, abbreviation: SAONd) in which only one kind of metal was doped to strontium aluminate (SrAl₂O₄), and a compound (SrAl₂O₄:Eu²⁺,Cr³⁺, abbreviation: SAOEuCr, SrAl₂O₄: Eu²⁺,Nd³⁺, abbreviation: SAOEuNd, SrAl₂O₄:Cr³⁺,Nd³⁺, abbreviation: SAOCrNd) in which only two kinds of metals were doped to strontium aluminate (SrAl₂O₄) were compared to one another. Incidentally, the concentrations of the respective metal ions doped in this experiment are all set to 1 mol%, respectively. The results are illustrated in Figure 3.

As can be seen from Figure 3, remarkable near-infrared mechanoluminescence were acknowledged in SAOEuCr or SAOEuNd and SAOEuCrNd. Among them, significantly high near-infrared mechanoluminescence and afterglow was obtained from the compound in which three kinds of Eu²⁺, Cr³⁺, and Nd³⁺ were co-doped to strontium aluminate (SrAl₂O₄) at the same time.

From this fact, it has been indicated that a near-infrared mechano luminescent material emitting near-infrared light by stress is formed as Eu²⁺ and Cr³⁺ are co-doped to an aluminate, Eu²⁺ and Nd³⁺ are co-doped to an aluminate, or Eu²⁺, Cr³⁺, and Nd³⁺ are co-doped to an aluminate.

In addition, particularly, it has been indicated that it is an effective means for obtaining a material exhibiting high near-infrared mechanoluminescence and afterglow to co-dope three kinds of Eu²⁺, Cr³⁺, and Nd³⁺ to strontium aluminate (SrAl₂O₄) at the same time.

### [Test for confirming doped metal ion species dependence of near-infrared mechanoluminescence and afterglow intensity]

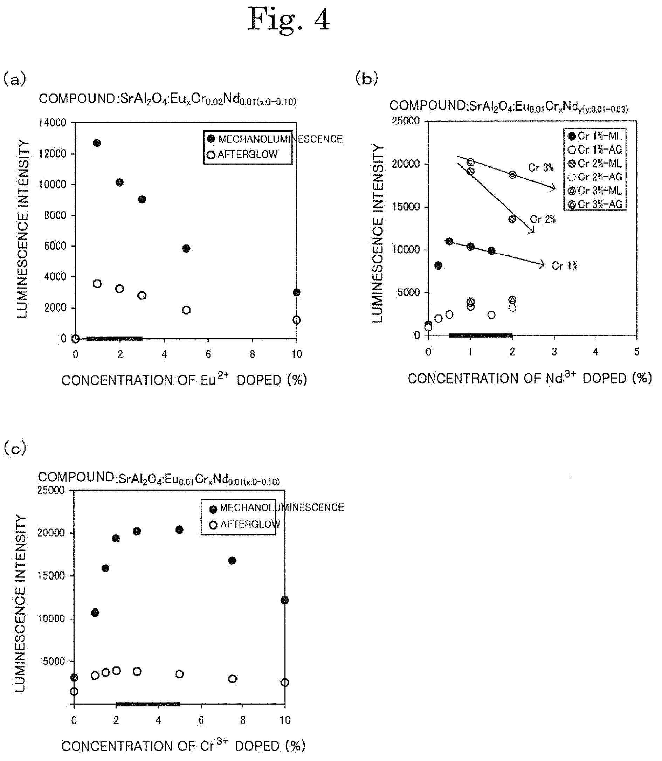

Next, attention was paid to SAOEuCrNd, and a difference in near-infrared luminescent properties and afterglow properties when the concentrations of Eu²⁺, Cr³⁺, and Nd³⁺ were changed, respectively, was investigated. The results are illustrated in Figure 4.

As can be seen from Figure 4(a) as well, it has been indicated that the concentration range of Eu²⁺ is preferably from 0.25 to 10%, but it is more desirably from 0.5 to 3.0% (range of straight line on the concentration axis) from the results of the present test.

In addition, as can be seen from Figure 4(b) as well, it has been indicated that the concentration range of Nd³⁺ is preferably from 0.25 to 10%, but it is more desirably from 0.5 to 2% (range of straight line on the concentration axis).

In addition, as can be seen from Figure 4(c) as well, it has been indicated that the concentration range of Cr³⁺ is preferably from 0.25 to 10%, but it is more desirably from 2 to 5% (range of straight line on the concentration axis).

[Test for confirming luminescence spectrum of SAOEuCrNd of near-infrared mechano luminescent material and afterglow material]

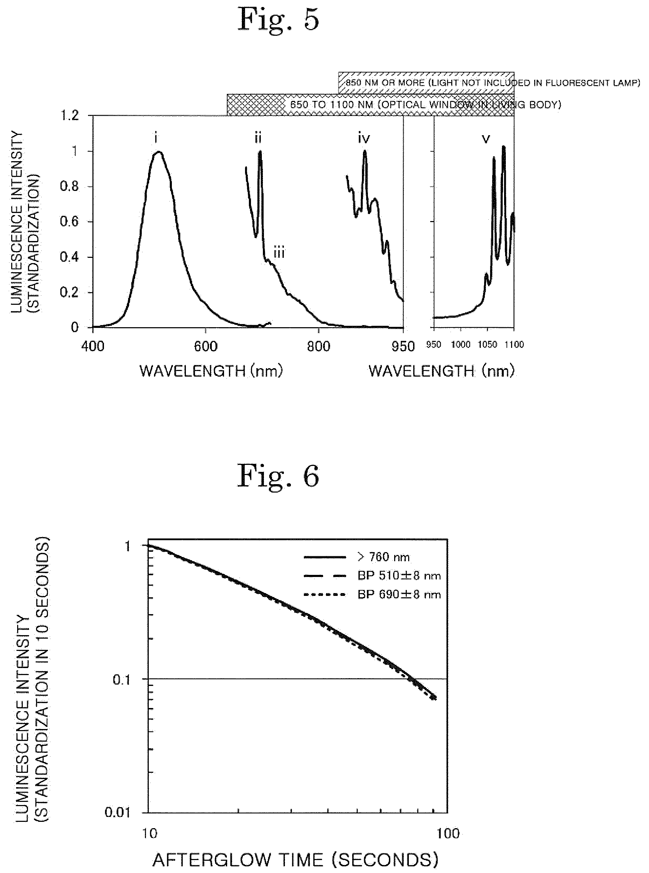

Next, it was confirmed that the near-infrared mechanoluminescent material or the afterglow material according to the present embodiment is luminescent in the near-infrared region (living body transmitting light wavelength: 650 to 1100 nm, wavelength region that is not included in the fluorescent lamp: 850 nm or more). The results are illustrated in Figure 5.

As the results of the present test, the luminescence peaks (ii and iii) derived from Cr³⁺ and the luminescence peaks (iv and v) derived from Nd³⁺ were observed in a region of from 650 to 1100 nm that is an optical window in the living body in addition to the luminescence (i) from Eu²⁺. From this fact, it has been indicated that the near-infrared mechanoluminescent material or the afterglow material according to the present embodiment is a near-infrared luminescent material.

### [Afterglow decay curve of SAOEuCrNd of near-infrared mechanoluminescent material at each wavelength]

Next, it was confirmed whether the near-infrared mechanoluminescent material according to the present embodiment is one that functions as a near-infrared afterglow material or not. In other words, it was confirmed that the near-infrared mechanoluminescent material according to the present embodiment exhibits afterglow in the near-infrared region (living body transmitting light wavelength: 650 to 1100 nm, wavelength region that is not included in the fluorescent lamp: 850 nm or more).

Specifically, the afterglow after excitation for 1 minute by ultraviolet light (365 nm, 0.7 mW/cm²) was measured and recorded using a near-infrared light compatible CCD camera (SV-200i manufactured by Photron USA, Inc.), and the numerical analysis was conducted. For the excitation wavelength, both of ultraviolet light and visible light were able to be used, but a ultraviolet lamp was used for the convenience of experiment. The results are illustrated in Figure 6.

As illustrated in Figure 6, afterglow derived from Eu²⁺ (measured using a filter of 510 ± 8 nm, measurement wavelength range including the peak (i) in Figure 5) was observed, and afterglow derived from Cr³⁺ (measured using a filter of 690 ± 8 nm, measurement wavelength range including the peaks (ii) and (iii) in Figure 5) and afterglow derived from Nd³⁺ (measured using a filter of > 760 nm, measurement wavelength range including the peaks (iv) and (v) in Figure 5) were observed in the wavelength region of from 650 to 1100 nm of an optical window in living body. From this fact, it has been indicated that the near-infrared mechanoluminescent material according to the present embodiment is a near-infrared afterglow material.

### [Test for measuring near-infrared mechano luminescence of near-infrared mechano luminescent body and afterglow body]

Next, it was confirmed that the near-infrared mechanoluminescent body (near-infrared afterglow body) according to the present embodiment exhibits mechano luminescence in the near-infrared region (living body transmitting light wavelength: 650 to 1100 nm, wavelength region that is not included in the fluorescent lamp: 850 nm or more).

In the test, a cylindrical pellet obtained by adding the near-infrared mechanoluminescent material (SAOEuCrNd) to an epoxy resin as a matrix material and curing and molding the mixture was used as a near-infrared mechanoluminescent body and a near-infrared afterglow body according the to the present embodiment. First, the present pellet was excited for 1 minute by ultraviolet light (365 nm, 0.7 mW/cm²), and a compressive load (up to 1000 N, 3 mm/min) was applied thereto after 30 seconds using a material testing machine.

Only near-infrared light of 760 nm or more which matched with the wavelength region of from 650 to 1100 nm of an optical window in the living body of the luminescence thus obtained was transmitted using a short wavelength cut-off filter and recorded using a near-infrared light compatible CCD camera (SV-200i manufactured by Photron USA, Inc.). In addition, the numerical analysis on the luminescence intensity in the vicinity of the point of contact between the pellet and the material testing machine was conducted. The results are illustrated in Figure 7.

As can be seen from Figure 7, a specific mechanoluminescence pattern in association with the application of a load (Figure 7(a): intensive luminescence at the point of contact between the pellet and the material testing machine) and luminescence response (Figure 7(b)) corresponding to the load signal were obtained. From this fact, it has been indicated that the near-infrared mechanoluminescent body according to the present embodiment exhibits near-infrared mechanoluminescent properties. In addition, it has been indicated that the near-infrared mechanoluminescent body according to the present embodiment exhibits near-infrared afterglow properties. Concurrently, from the results of these tests, it has been indicated that it is possible to form a near-infrared mechanoluminescent body exhibiting higher near-infrared mechanoluminescent properties or a near-infrared afterglow body exhibiting higher near-infrared afterglow properties by adding a wavelength converting material to a matrix material.

### [Experiment for acquiring living body transmission image by afterglow from near-infrared mechanoluminescent body]

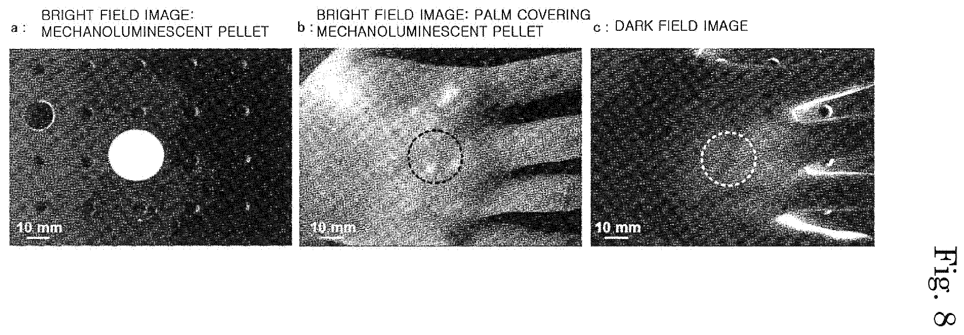

Next, it was verified whether the afterglow from the used near-infrared mechanoluminescent body (near-infrared afterglow) according to the present embodiment is able to transmit the living body or not. The situation thereof and the results are illustrated in Figure 8.

In the present test, the pellet of the near-infrared mechanoluminescent body (SAOEuCrNd) described above was used, and all images were recorded in the same field of view using the same camera (near-infrared light compatible, BU-51LN, BITRAN Co.) (Figure 8a).

First, the present pellet was covered and concealed with the palm immediately after the pellet was excited for 1 minute by ultraviolet light (365 nm, 0.7 mW/cm²). From the bright field image at this time, it is possible to confirm that the back of the hand illuminated by bright ambient light is projected (Figure 8b).

It is possible to confirm that only the vicinity of the position (circled portion) at which the pellet is of the palm is bright when the room is darkened in that state (Figure 8c). In addition, it is also possible to confirm that the blood vessel is projected as a black line. This is because blood has a higher near-infrared light absorptivity as compared to other biological tissues.

In view of the above, the dark field image means that the afterglow (near-infrared light) from the pellet is detected together with the palm (biological tissue). This phenomenon is not observed in the mechanoluminescent material which does not exhibit near-infrared luminescence of the prior art.

From the above, it has been indicated that the near-infrared mechanoluminescent material according to the present embodiment or the near-infrared mechanoluminescent body according to the present embodiment emits highly living body transmissive near-infrared light as the afterglow and can be used as a near-infrared afterglow material or a near-infrared afterglow body capable of solving the problem that it is luminescent at a wavelength exhibiting low living body transmissive properties of a mechanoluminescent and afterglow material of the prior art.

### [Experiment for visualizing biomechanical information using near-infrared mechano luminescent body]

Next, it was verified that the mechanoluminescence derived from the near-infrared mechanoluminescent properties or afterglow derived from the near-infrared afterglow properties of the near-infrared mechanoluminescent body according to the present embodiment can realize biological transmission using the near-infrared mechanoluminescent body according to the present embodiment.

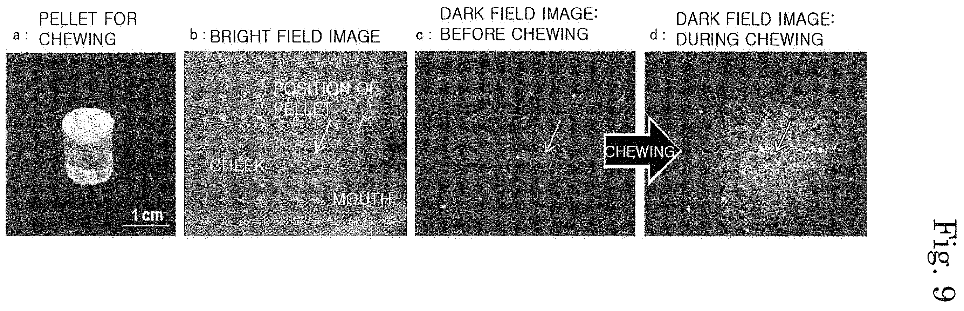

Specifically, an experiment on that the biomechanical information (here, force of mastication) can be detected from the outside of the body via the near-infrared mechanoluminescence or near-infrared afterglow from the near-infrared mechanoluminescent body according to the present embodiment was conducted. The situation thereof and the results are illustrated in Figure 9.

In the test, a cylindrical pellet obtained by slightly miniaturizing the near-infrared mechano luminescent body described above was used as a sample (Figure 9a), and all images were recorded in the same field of view using the same CCD camera (near-infrared light compatible, SV-200i manufactured by Photron USA, Inc.).

First, the present pellet was excited for 1 minute by ultraviolet light (365 nm, 0.7 mW/cm²), put in a transparent pack in consideration of hygiene when chewing, and then sandwiched between the back teeth such that the luminescent surface thereof faces outside. On the bright field image at this time, the right cheek illuminated by bright ambient light of the tester is taken (Figure 9b). The arrows in the figure means the position at which the pellet in a state of being sandwiched between the back teeth is.

It is possible to confirm faint luminescence in the vicinity of the arrow when the room is darkened in that state (Figure 9c). This means that the near-infrared afterglow from the pellet is detected together with the cheek (biological tissue).

Furthermore, it was possible to confirm that the luminescence at the position described above became intensive when the back teeth sandwiching the pellet bit (chew) the pellet in this state (Figure 9d). This means that the near-infrared mechano luminescence from the pellet is detected together with the cheek (biological tissue). This phenomenon is not observed in the mechanoluminescent material which does not exhibit near-infrared luminescence of the prior art. As a result, it can be said that the near-infrared mechanoluminescent body (near-infrared mechanoluminescent material) according to the present embodiment emits highly living body transmissive near-infrared light and the problem (luminescent wavelength exhibiting low living body transmissive properties) of a mechanoluminescent and afterglow material of the prior art has been solved.

From these, it has been indicated that it is possible to solve the problem of low living body transmissive properties of mechanoluminescence in the prior art and to detect in-vivo mechanical information (including teeth, bones, implants, prosthetic joints, and the like) from the outside of the body by using the near-infrared mechanoluminescent body (near-infrared mechanoluminescent material) according to the present embodiment.

### [Test for measuring mechanoluminescence in bright environment]

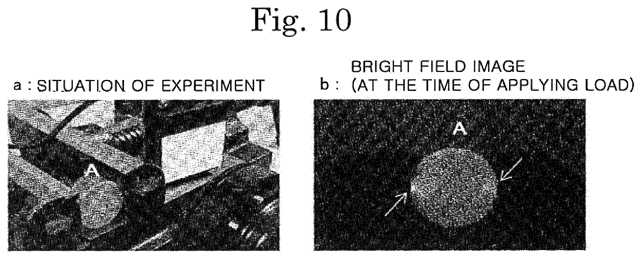

In the present test, it was verified that the near-infrared mechanoluminescent body (near-infrared mechanoluminescent material) according to the present embodiment can solve the problem that a dark room and a blackout curtain are required of the prior art and can be measured even in a bright environment, for example, under the fluorescent lamp and a green light source (about 500 luxes). The situation thereof and the results are illustrated in Figure 10.

In the test, a cylindrical pellet obtained by slightly miniaturizing the near-infrared mechanoluminescent body described above was used as a sample. First, the present pellet was excited for 1 minute by ultraviolet light (365 nm, 0.7 mW/cm²) and sandwiched between vises (Figure 10a). A compressive load was applied to the pellet using the vises in a state that the fluorescent lamp was turned on and the green LED was turned on immediately next to the fluorescent lamp in order to purposely provide a bright environment as the measurement environment. The situation recorded using a camera at that time is illustrated in Figure 10b. Incidentally, a short-wavelength cut-off filter which cuts light at 830 nm or less included in the fluorescent lamp is installed in front of the camera.

As a result, only mechanoluminescence and afterglow from the near-infrared mechanoluminescent body and afterglow material was detected without being affected by the light from the fluorescent lamp and green LED at all.

From this fact, it has been indicated that it is possible to solve the problem that a dark room is required of the prior art and to measure the mechanoluminescence even at a bright place by using the near-infrared mechanoluminescent body (near-infrared mechanoluminescent material) according to the present embodiment.

As has been described above, according to the near-infrared mechanoluminescent material according to the present embodiment, it is possible to provide a mechanoluminescent material which is able to radiate near-infrared light since the near-infrared mechanoluminescent material according to the present embodiment is formed by co-doping Eu²⁺, Cr³⁺, and an ion or ion cluster of at least any one rare earth metal element selected from Sc, Y, La, Ce, Pr, Nd, Pm, Sm, Eu, Gd, Tb, Dy, Ho, Er, Tm, Yb, or Lu to an aluminate.

Finally, the description of each embodiment described above is an example of the present invention, and the present invention is not limited to the embodiments described above. Hence, it is needless to say that various modifications can be made in accordance with design and the like as long as they not depart from the technical idea according to the present invention even though they are other than each embodiment described above.

## Claims

1. A near-infrared mechanoluminescent material comprising an aluminate co-doped with Eu²⁺, Cr³⁺, and an ion or ion cluster of at least any one rare earth metal element selected from Sc, Y, La, Ce, Pr, Nd, Pm, Sm, Eu, Gd, Tb, Dy, Ho, Er, Tm, Yb, or Lu.

2. The near-infrared mechano luminescent material according to claim 1, wherein the aluminate is an aluminate represented by Formula MAl₂O₄ (provided that, M is any of Mg, Ca, Sr, or Ba).

3. The near-infrared mechanoluminescent material according to claim 2, wherein Eu²⁺ is co-doped at a concentration at which M in the aluminate represented by Formula MAl₂O₄ is substituted by from 0.25 to 10%.

4. The near-infrared mechanoluminescent material according to claim 2 or 3, wherein Cr³⁺ is co-doped at a concentration at which M in the aluminate represented by Formula MAl₂O₄ is substituted by from 0.25 to 10%.

5. The near-infrared mechanoluminescent material according to any one of claims 2 to 4, wherein the ion or ion cluster of a rare earth metal element is co-doped at a concentration at which M in the aluminate represented by Formula MAl₂O₄ is substituted by from 0.25 to 10%.

6. The near-infrared mechanoluminescent material according to any one of claims 1 to 5, wherein the ion of a rare earth metal element is Nd³⁺.

7. The near-infrared mechanoluminescent material according to claim 6, wherein Nd³⁺ is co-doped at a concentration at which M in the aluminate represented by Formula MAl₂O₄ is substituted by from 0.25 to 10%.

8. A near-infrared mechanoluminescent material comprising an aluminate co-doped with Eu²⁺ and Nd³⁺.

9. A near-infrared mechanoluminescent body formed by dispersing the near-infrared mechanoluminescent material according to any one of claims 1 to 8 in a predetermined matrix material.

10. The near-infrared mechanoluminescent body according to claim 9, wherein a wavelength converting material which is excited by an electromagnetic wave which has a wavelength other than a near-infrared wavelength and is radiated from the near-infrared mechanoluminescent material and radiates an electromagnetic wave having a near-infrared wavelength is added to the matrix material.

11. A method for manufacturing a near-infrared mechanoluminescent material, the method comprising:
a mixing step of producing a raw material mixture by mixing a host material constituting raw material to constitute an aluminate through a calcining step to be described later, a Eu²⁺ supplying raw material to supply Eu²⁺ to the aluminate, a Cr³⁺ supplying raw material to supply Cr³⁺ to the aluminate, and a rare earth metal element ion supplying raw material to supply an ion or ion cluster of at least any one rare earth metal element selected from Sc, Y, La, Ce, Pr, Nd, Pm, Sm, Eu, Gd, Tb, Dy, Ho, Er, Tm, Yb, or Lu to the aluminate, and
a calcining step of calcining the raw material mixture produced in the mixing step to produce a near-infrared mechanoluminescent material including an aluminate co-doped with Eu²⁺, Cr³⁺, and the ion or ion cluster of a rare earth metal element.

12. Use of Eu²⁺, Cr³⁺, and an ion or ion cluster of at least any one rare earth metal element selected from Sc, Y, La, Ce, Pr, Nd, Pm, Sm, Eu, Gd, Tb, Dy, Ho, Er, Tm, Yb, or Lu as a near-infrared ray luminescent center of a mechanoluminescent material in an aluminate in a co-doped state.

13. Use of the near-infrared mechanoluminescent material according to any one of claims 1 to 8 as an afterglow material.

14. Use of the near-infrared mechanoluminescent body according to claim 9 or 10 as an afterglow body.
